# EUROPEAN PATENT APPLICATION

(11) **EP 4 718 925 A1**
(43) Date of publication of application: **01.04.2026**
(21) Application number: 24825168.8
(22) Date of filing: 11.06.2024
(51) Int. Cl.: H04W 72/04, H04W 64/00, H04B 7/145

(54) **MOBILITY MANAGEMENT METHOD, COMMUNICATION APPARATUS, AND STORAGE MEDIUM**

(30) Priority: 21.06.2023 CN 202310746861
(71) Applicant: ZTE Corporation, Shenzhen, Guangdong 518057 (CN)
(72) Inventor: DAI, Qian, Shenzhen, Guangdong 518057 (CN); LI, Ping, Shenzhen, Guangdong 518057 (CN); CUI, Yijun, Shenzhen, Guangdong 518057 (CN)
(74) Representative: Ziebig Hengelhaupt Intellectual Property Attorneys Patentanwaltskanzlei PartGmbB
(86) International application number: PCT/CN2024/098434
(87) International publication number: WO 2024/260272

(57) **Abstract**

The present disclosure provides a mobility management method, a communication apparatus, and a storage medium. The method comprises: acquiring mobility information of a first node; and determining a codebook updating strategy of the first node on the basis of the mobility information of the first node.

## Description

The present disclosure claims priority to the Chinese patent application No. 202310746861.3, filed on June 21, 2023, the entire content of which is incorporated in the present disclosure by reference.

### TECHNICAL FIELD

The present disclosure relates to the field of wireless communication technologies, and in particular to a mobility management method, a communication apparatus, and a storage medium.

### BACKGROUND

A reconfigurable intelligent surface (RIS) is an artificial electromagnetic material with a programmable electromagnetic property, that includes a large number of low-cost reflection array elements, and may adjust and control the focused direction of a departure beam by controlling the phase and amplitude of each of the array elements, so as to change the propagation path of the electromagnetic wave, thereby enabling the control of the wireless network environment.

The RIS is generally deployed as follows: one or more dedicated RISs are deployed within a coverage range of a base station (BS), to improve signals of coverage blind spots within the coverage area of the base station. In some special scenarios, the RIS will be deployed on a mobile vehicle, to provide signal relay and coverage for users in the vehicle. For example, in a high-speed train, transmissive RISs need to be deployed at train windows to reflect the beam of the base station into the space inside the train carriage. However, the movement of the vehicle will lead to the movement of the RIS, and then will lead to a continuous change in a relative position relationship between the RIS and the roadside base station antenna, resulting in a continuous change in an angular relationship between the arrival beam and the departure beam of the RIS. In this way, it will result in the departure beam of the RIS not being able to stably cover the user equipment (UE) within the vehicle, so that the fluctuation of the signal quality of the UE is large.

### SUMMARY

In an aspect, a mobility management method is provided, the method is applied to a first node, and the method includes:
acquiring mobility information of the first node; and
determining a codebook updating strategy of the first node based on the mobility information of the first node.

In another aspect, a mobility management method is provided, the method is applied to a second node, and the method includes:
acquiring mobility information of a first node;
determining a target codebook based on the mobility information of the first node and a preset codebook table; and
sending a codebook updating indication information to the first node, the codebook updating indication information including an identifier of the target codebook.

In yet another aspect, a management apparatus is provided, and includes:
an acquiring module, configured to acquire mobility information of a first node; and
a determining module, configured to determine a codebook updating strategy of the first node based on the mobility information of the first node.

In yet another aspect, a management apparatus is provided, and applied to a base station. The management apparatus includes:
an acquiring module, configured to acquire mobility information of a first node;
a determining module, configured to determine a target codebook based on the mobility information of the first node and a preset codebook table; and
a sending module, configured to send codebook updating indication information to the first node, the codebook updating indication information including an identifier of the target codebook.

In yet another aspect, a communication apparatus is provided, and includes: a memory and a processor; the memory is coupled with the processor; the memory is configured to store a computer program; and the processor, when executing the computer program, implements the mobility management method described in any one of the above aspects or embodiments.

In yet another aspect, a computer-readable storage medium is provided, the computer-readable storage medium has stored computer program instructions, and the computer program instructions, when executed by a processor, implement the mobility management method described in any one of the above aspects or embodiments.

In yet another aspect, a computer program product is provided, and the computer program product includes computer program instructions, and the computer program instructions, when executed by a processor, implement the mobility management method described in any one of the above aspects or embodiments.

### BRIEF DESCRIPTION OF THE DRAWINGS

In order to more clearly illustrate technical solutions in the present disclosure, the drawings to be used in some embodiments of the present disclosure will be briefly described below, and it is obvious that the drawings in the following description are only drawings of some embodiments of the present disclosure, and other drawings may also be obtained by those ordinary skilled in the art according to these drawings.
FIG. 1 is a schematic diagram of an architecture of a communication system provided in some embodiments of the present disclosure.
FIG. 2 is a schematic diagram of a structure of a base station provided in some embodiments of the present disclosure.
FIG. 3 is a schematic diagram of a structure of a relay reflection device provided in some embodiments of the present disclosure.
FIG. 4 is a schematic diagram of a structure form of a relay reflection device provided in some embodiments of the present disclosure.
FIG. 5 is a schematic diagram of another structure form of a relay reflection device provided in some embodiments of the present disclosure.
FIG. 6 is a schematic diagram of an application scenario of a communication system provided in some embodiments of the present disclosure.
FIG. 7 is a schematic diagram of another application scenario of a communication system provided in some embodiments of the present disclosure.
FIG. 8 is a schematic diagram of yet another application scenario of a communication system provided in some embodiments of the present disclosure.
FIG. 9 is a flowchart of a mobility management method provided in some embodiments of the present disclosure.
FIG. 10 is a flowchart of another mobility management method provided in some embodiments of the present disclosure.
FIG. 11 is a schematic diagram of an application scenario of a mobility management method provided in some embodiments of the present disclosure.
FIG. 12 is a schematic diagram of another application scenario of a mobility management method provided in some embodiments of the present disclosure.
FIG. 13 is a flowchart of yet another mobility management method provided in some embodiments of the present disclosure.
FIG. 14 is a flowchart of yet another mobility management method provided in some embodiments of the present disclosure.
FIG. 15 is a schematic diagram of yet another application scenario of a mobility management method provided in some embodiments of the present disclosure.
FIG. 16 is a schematic diagram of yet another application scenario of a mobility management method provided in some embodiments of the present disclosure.
FIG. 17 is a schematic diagram of yet another application scenario of a mobility management method provided in some embodiments of the present disclosure.
FIG. 18 is a schematic diagram of yet another application scenario of a mobility management method provided in some embodiments of the present disclosure.
FIG. 19 is a schematic diagram of a structure of a management apparatus provided in some embodiments of the present disclosure.
FIG. 20 is a schematic diagram of a structure of another management apparatus provided in some embodiments of the present disclosure.
FIG. 21 is a schematic diagram of a structure of a communication apparatus provided in some embodiments of the present disclosure.

### DETAILED DESCRIPTION

The technical solutions in the present disclosure will be clearly and completely described below in conjunction with the drawings in the present disclosure, and it is obvious that the described embodiments are only some of the embodiments in the present disclosure, but not all of the embodiments. Based on the embodiments in the present disclosure, all other embodiments obtained by those ordinary skilled in the art without making creative labor fall within the scope of protection of the present disclosure.

It should be noted that in the present disclosure, the words "exemplarily (exemplary)" or "for example (e.g., such as)" are used to represent an example, an explanation, or an illustration. Any embodiment or design solution described with "exemplarily (exemplary)" or "for example (e.g., such as)", etc., in the present disclosure should not be interpreted as being more preferred or more advantageous than other embodiments or design solutions. Rather, the use of the words "exemplarily (exemplary)" or "for example (e.g., such as)" is intended to present the related concepts in some manner.

Hereinafter, the terms "first", "second", etc., are used for descriptive purposes only, and are not to be interpreted as indicating or implying the relative importance or implicitly specifying the number of technical features indicated. Thus, features defined with "first", "second", etc., may include one or more such features, explicitly or implicitly.

In the description of the present disclosure, unless otherwise specified, "/" means "or", e.g., A/B may mean A or B. "and/or" herein is only a description for an association relationship of associated objects, which means that there may be three relationships, for example, A and/or B may mean: only A, only B, and both A and B. In addition, "at least one" means one or more, and "multiple/plurality of" means two or more.

With the explosive growth of data traffic, the millimeter-wave (mmWave) communication has become a key technology for fifth-generation mobile communications with its abundant available frequency bands. A first serious challenge in implementing the mmWave communication is the path loss, and in order to compensate for the serious path loss of the mmWave during a transmission, the mmWave base station (BS) generally uses a large-scale antenna array for a narrow-beam transmission, which may efficiently concentrate the transmission energy in a certain area or direction. However, the mmWave directional transmission is very sensitive to blocking and may even lead to connection interruption, which also brings new challenges for the establishment and maintenance of the mmWave link. For this, the device with signal forwarding and relaying functions such as the RIS and a network controlled repeater (NCR), etc., has been integrated into the mmWave cellular system.

The RIS is an artificial electromagnetic material with a programmable electromagnetic property, that includes a large number of low-cost reflection array elements, and may adjust and control the focused direction of a departure beam by controlling the phase and amplitude of each of the array elements, so as to change the propagation path of the electromagnetic wave, thereby enabling the control of the wireless network environment.

The traditional wireless technologies generally perform signal processing at the receiving and transmitting ends, to adapt to the dynamic and uncontrollable wireless network environments, but the RIS can proactively correct the radio channel through a controllable intelligent signal reflection technology. Thus, the RIS provides a new degree of freedom for wireless link performance improvement, and paves the way for the implementation of the intelligent programmable wireless environment. Exemplarily, in the mmWave cellular system, the blocking problem of the radio channel due to factors such as terrain or obstacles, etc., would severely degrade the communication quality and even cause link interruption. The RIS has the potential to be a new method to deal with the blocking problem of the mmWave communication by means of its capability to change the electromagnetic wave transmission environment. For users whose links with the base station are blocked, the phase adjustment of the RIS may enable the transmission path of electromagnetic waves to bypass obstructions to arrive at the users, thereby improving the communication quality and the coverage capability of the mmWave system.

The RIS is generally deployed as follows: one or more dedicated RISs are deployed within a coverage range of a base station, to improve signals of coverage blind spots within the coverage area of the base station. In some special scenarios, the RIS will be deployed on a mobile vehicle, to provide signal relay and coverage for users in the vehicle. For example, in a high-speed train, transmissive RISs need to be deployed at train windows to reflect the beam of the base station into the space inside the train carriage. However, the movement of the vehicle will lead to the movement of the RIS, and then will lead to a continuous change in a relative position relationship between the RIS and the roadside base station antenna, resulting in a continuous change in an angular relationship between the arrival beam and the departure beam of the RIS. In this way, it will result in the departure beam of the RIS not being able to stably cover the UE within the vehicle, so that the fluctuation of the signal quality of the UE is large.

Therefore, in order to ensure the stable coverage for the UE within the vehicle, the RIS needs to change the codebook frequently. However, since the mobile RIS cannot accurately measure spatial relationships such as the distance and azimuth angle between the RIS and the station antenna, etc., in advance, it can only estimate by measuring the synchronization signal or the reference signal in real time to determine a codebook that needs to be changed to. Therefore, changing the codebook frequently may lead to problems such as increased measurement overhead and signaling overhead, delay in codebook updating, and low accuracy of codebook updating, etc.

Exemplarily, the RIS may perform measurements through a synchronization signal and physical broadcast channel (PBCH) block (synchronization signal and PBCH block, SSB) or a channel state information-reference signal (CSI-RS); or, the base station performs measurements through a sounding reference signal (SRS) of the cascade ports (uplink) of the RIS, and so on. However, no matter which signal is measured, it requires additional measurement overhead and delay. Meanwhile, the RIS also needs to report the measurement result (e.g., to the base station) after the measurement is completed, which generates reporting delay; the base station then determines a new RIS codebook according to the measurement signal and delivers it to the RIS, which may generate processing delay and delivering delay, etc.

Assuming that the measurement period is configured to be 20 ms, the time consumed for reporting is about 10 to 20 slots (1 slot is 1 ms to 0.125 ms, with SCS of 15kHz~120kHz), and the delay for the base station to process and deliver the new codebook is about 4 to 5 ms; the total time consumed is about: 30 to 35 ms in the sub6G frequency band; and 25 to 28 ms in the FR2 frequency band, so in the high-speed train scenario (350 to 500 m/h), the RIS will generate a shift of about 1m/10ms within the measurement delay, resulting in a lag in the application of the new codebook.

Considering that the RIS needs more delay if it needs a high-layer handover procedure when crossing an overlapping area of 2 access points.

In addition, estimating the distance from the RIS to the station antenna or the direction of arrival (DOA) or angle of arrival (AOA) of the beam by measuring the reference signal, has some errors, which will affect the accuracy of the codebook selection, and then affect the coverage performance within the vehicle.

To sum up, the problems of the related art are: in a scenario of the RIS being deployed on a mobile vehicle, how to solve the problems of increased measurement overhead and increased signaling overhead, delayed codebook updating, and low accuracy of codebook updating that may be caused by changing the codebook frequently.

In response to the above technical problems, the embodiments of the present disclosure provide a mobility management method, which has the following ideas: acquiring mobility information of a first node; and then, based on the mobility information of the first node and a preset codebook table, determining a target codebook, and sending codebook updating indication information to the first node, the codebook updating indication information including an identifier of the target codebook. As can be seen, in the embodiments of the present disclosure, by means of the preset codebook, there is no need to detect and determine the codebook in real time, which can reduce the measurement overhead and signaling overhead, reduce the time delay of the codebook updating, and improve the accuracy of the codebook updating.

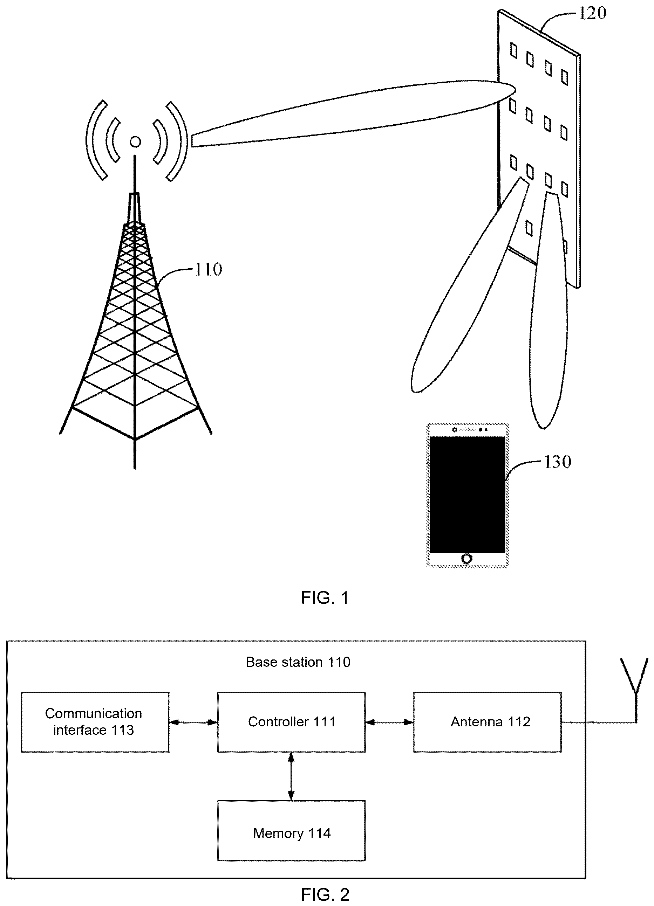

Referring to FIG. 1, it is a schematic diagram of an architecture of a communication system provided in the embodiments of the present disclosure. As shown in FIG. 1, the communication system includes: a base station 110, a relay reflection device 120, and a terminal device 130.

The base station 110 is configured to transmit and receive electromagnetic waves.

Exemplarily, the base station 110 may be a next generation base station (the next Generation Node B, gNB).

In some embodiments, as shown in FIG. 2, the base station 110 includes: a controller 111 and an antenna 112. The controller 111 is configured to manage a radio communication interface and a radio channel. The antenna 112 is configured to transmit and receive electromagnetic waves.

Exemplarily, the antenna 112 may transmit electromagnetic waves to the relay reflection device 120 according to the control of the controller 111.

In some embodiments, the base station 110 may also include a communication interface 113 for information interaction with other devices. Exemplarily, the base station 110 may perform information interaction with the relay reflection device 120 via the communication interface 113. The base station 110 may also perform information interaction with other devices, such as a network server, etc., via the communication interface 113.

In some embodiments, the base station 110 may also include a memory 114 for storing data. Exemplarily, the memory 114 may be used to store a codebook.

Exemplarily, the memory 114 may be a read-only memory (ROM) or other types of static storage devices that may store static information and instructions, random access memory (RAM) or other types of dynamic storage devices that may store information and instructions, or an electrically erasable programmable read-only memory (EEPROM), a disk storage medium or other magnetic storage devices, or any other medium capable of being used to carry or store desired program codes in the form of instructions or data structures and capable of being accessed by a computer, but not limited thereto.

The relay reflection device 120 is configured to relay or forward electromagnetic waves transmitted by the base station 110.

Exemplarily, the relay reflection device 120 may be an RIS, an NCR, an intelligent repeater, or other devices with signal forwarding and relaying functions.

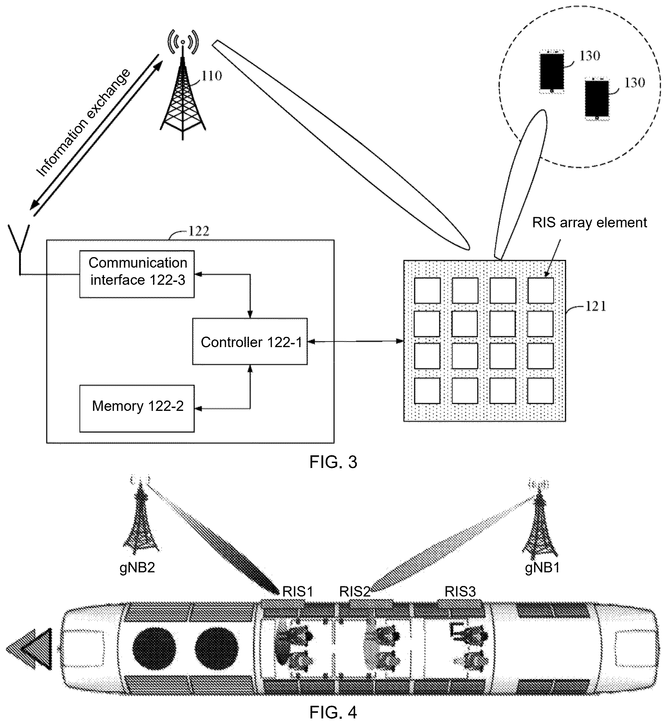

In some embodiments, as shown in FIG. 3, the relay reflection device 120 includes: a reflection module 121 and a control module 122. Exemplarily, in the case where the relay reflection device 120 is an RIS, the above-described reflection module 121 may be a signal relay module (RIS-Forwarding, RIS-Fwd) of the RIS; the above-described control module 122 may be a communication and control module (RIS-Mobile-Termination, RIS-MT) of the RIS.

The reflection module 121 includes a reflection array including antenna array elements, used to adjust the arrival beam in different ways according to codebooks of different antenna array elements (the codebook is used to control the spectrum, phase, amplitude, and polarization value of each antenna array element), so that the departure beam may achieve the change to a different amplitude, different width, different frequency shift, and different departure angle, as well as the change of single-beam reflection, multibeam reflection, diffuse scattering, refraction, transmission, and so on.

Exemplarily, the reflection module 121 may reflect the arrival beam to a designated area (e.g., a coverage blind area of the base station) to serve the UE in the area, according to a beam indication (i.e., codebook) provided by the control module 122. For example, in the embodiments of the present disclosure, the reflection module 121 may adjust the arrival beam from the base station 110 to a departure beam towards the terminal device 130.

The control module 122 includes a controller 122-1, a memory 122-2, and a communication interface 122-3.

The controller 122-1 is configured to transmit a relay beam indication (i.e., codebook) to the reflection module 121, and control an operating state of the reflection module 121.

Exemplarily, the controller 122-1 may control, according to an indication from the base station 110, the operating state of the reflection module 121, such as: on or off state (control the reflection module 121 to be operating or not operating, etc.); power control (control the amplitude of the reflected beam of the reflection module 121); and relay beam indication (a codebook of an antenna array element of the reflection module 121).

It can be understood that a codebook represents a relative relationship between an arrival beam and a departure beam, and thus, a codebook may also be referred to as a beam indication, for the reflection array.

The memory 122-2 is configured to store the codebook.

The communication interface 122-3 is configured to perform information interaction with other devices. Exemplarily, the control module 122 may perform information interaction with the base station 110 via the communication interface 122-3.

Exemplarily, the control module 122 may receive control information (e.g., codebook updating information, etc.) sent from the base station 110 via the communication interface 122-3, and send operating state information of the RIS, configuration information of the RIS, and a codebook set of the RIS, etc., to the base station via the communication interface 122-3.

In some embodiments, the control module 122 may send sensor capability information, and a measurement result of a sensor module 123 to the base station 110 via the communication interface 122-3.

Exemplarily, the communication interface 122-3 may perform information interaction with other devices, via a narrow band Internet of Things (NB-loT), a 5th-generation mobile communication technology (5G), a wireless network transmission (wireless fidelity, WiFi), or other modes.

In some embodiments, the structure form of the relay reflection device 120 may include the following items.
(1) The reflection module 121 and the control module 122 are both co-located.
(2) A control module 122 controls a reflection module 121, and the two are not co-located; the reflection module 121 and the control module 122 may be connected to each other by wired or wireless means.
(3) A control module 122 controls a plurality of reflection modules 121, and the control module 122 and the reflection modules 121 are not co-located; exemplarily, a control module 122 may simultaneously control N reflection modules 121, and the control module 122 may receive control information of the N reflection modules 121 from the base station 110, and report state information of the N reflection modules 121 to the base station 110.

In the following, the structure form of the relay reflection device 120 is illustrated in conjunction with the drawings of the specification, by taking the relay reflection device 120 as an RIS, the reflection module 121 as an RIS-Fwd, and the control module 122 as an RIS-MT as an example.

Exemplarily, as shown in FIG. 4, the RIS may be deployed on a high-speed train carriage and the RIS-Fwd is integrated with the RIS-MT, and the operating frequency band and beams of the RIS-MT are a subset of those of the RIS-Fwd.

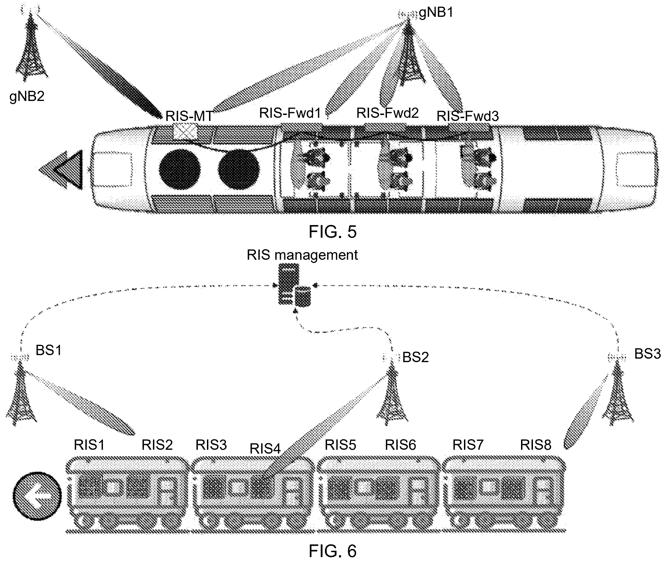

Exemplarily, as shown in FIG. 5, the RIS may be deployed on a high-speed train carriage, and an RIS-MT is deployed separately from a plurality of RIS-Fwds. In this structure form, in the forward direction, the RIS-MT will detect a neighboring cell beam earlier than the RIS-Fwds; and in the opposite forward direction, the RIS-MT will detect a neighboring cell beam later than the RIS-Fwds.

It should be noted that in addition to being deployed on the high-speed train carriage, the above-described structure forms are also applicable on other types of mobile vehicles, such as subways and light railways, drones, vehicles on highways, ferries, etc., which are not limited in the embodiments of the present disclosure.

The terminal device 130 is configured to communicate according to electromagnetic waves radiated by the relay reflection device 120.

Exemplarily, the terminal device 130 may be a UE, such as a mobile phone, a tablet computer, a desktop, a laptop, a handheld computer, a notebook computer, an ultra-mobile personal computer (UMPC), a netbook, and a cellular telephone, a personal digital assistant (PDA), an augmented reality (AR)\virtual reality (VR) device, and the like. The embodiments of the present disclosure do not impose special limitations on the specific form of the terminal device 130.

The scenarios involved in the communication system provided in the embodiments of the present disclosure are hereinafter described in conjunction with the drawings of the specification, by taking the relay reflection device 120 as an RIS as an example.

In some embodiments, as shown in FIG. 6, it is a schematic diagram of an application scenario of the communication system provided in the embodiments of the present disclosure. The scenario includes: an RIS management entity, a base station, and an RIS deployed on a mobile vehicle. As can be seen, in this scenario, the RIS needs a handover between base stations, during movement.

The above-described RIS management entity is configured to manage a codebook library of the RIS, deployment information of the RIS, and authentication of the RIS, etc. The RIS management entity may be deployed in: a base station, a core network domain, a core network element, an operation administration and maintenance (OAM) backend, or a radio access network (RAN) access network domain, and so on. Exemplarily, the above-described core network element may be: an access and mobility management function (AMF), a service management function (SMF), a point coordination function (PCF), a user port function (UPF), or an application function (AF), and the like.

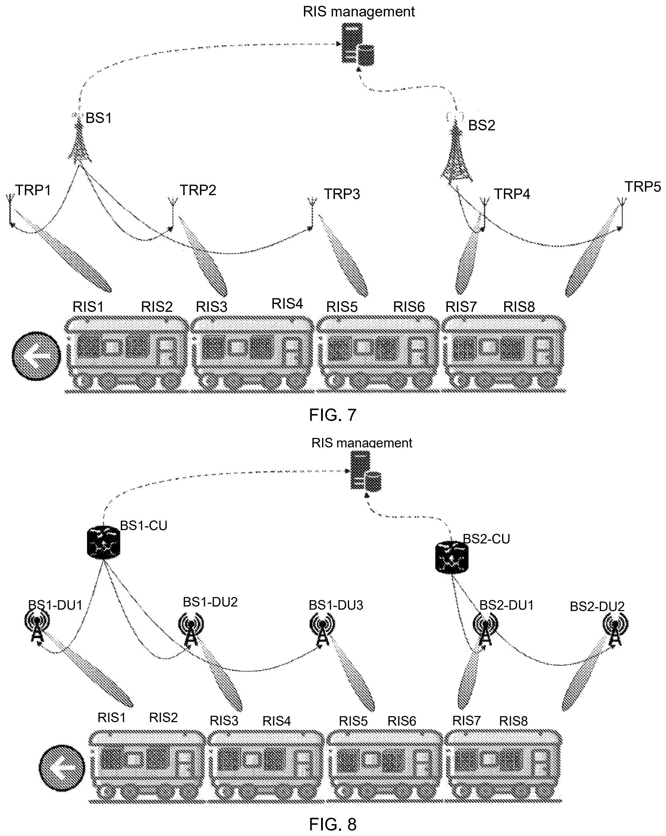

In some embodiments, the base station shown in FIG. 1 may include one or more transmission reception points (TRPs), to improve the coverage area of the base station. As shown in FIG. 7, it is a schematic diagram of another application scenario of the communication system provided in the embodiments of the present disclosure. The scenario includes: an RIS management entity, a base station, a TRP, and an RIS deployed on a mobile vehicle. As can be seen, in this scenario, the RIS needs handover between different TRPs of the same base station, and handover between different TRPs of different base stations, during movement.

In some embodiments, the architecture of the base station shown in FIG. 1 may be a separated architecture of a centralized unit (CU) and a distributed unit (DU). As shown in FIG. 8, it is a schematic diagram of another application scenario of the communication system provided in the embodiments of the present disclosure. The scenario includes: an RIS management entity, a DU, a CU of a base station, and an RIS deployed on a mobile vehicle. As can be seen, in this scenario, the RIS needs a handover between base stations, and a handover between different CUs of the same base station, during movement.

It should be noted that the system architectures and the application scenarios described in the embodiments of the present disclosure are for the purpose of more clearly illustrating the technical solutions of the embodiments of the present disclosure, and do not constitute a limitation on the technical solutions provided in the embodiments of the present disclosure, and those ordinary skilled in the art may know that, with the evolution of the system architecture and the emergence of new service scenarios, the technical solutions provided in the embodiments of the present disclosure are also applicable to similar technical problems.

The following is an exemplary description of a mobility management method provided in the embodiments of the present disclosure.

It should be noted that the executive body of the mobility management method provided in the embodiments of the present disclosure is not limited, for example, the method may be executed by the base station 110, or may be executed by the relay reflection device 120.

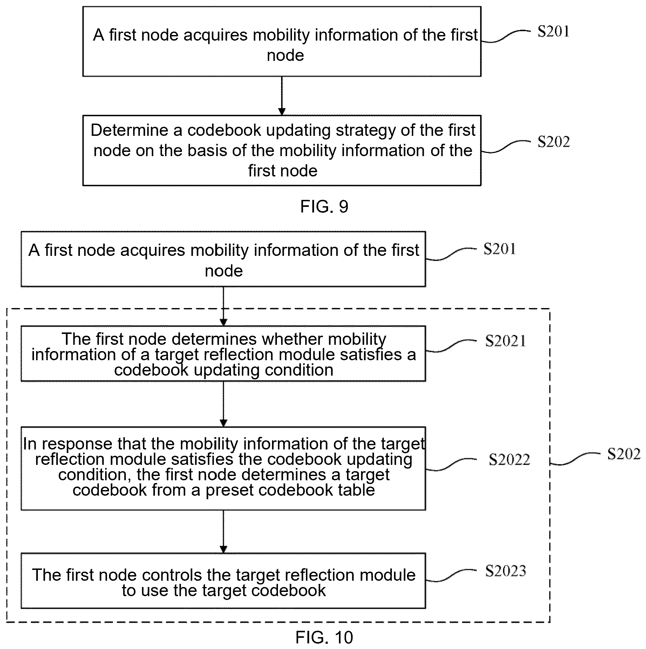

Exemplarily, as shown in FIG. 9, the method provided in the embodiments of the present disclosure may be applied to a first node (e.g., the first node may be a relay reflection device 120 as shown in FIG. 1), and the method may include the following steps.

S201, a first node acquires mobility information of the first node.

Exemplarily, the first node may be an RIS, an NCR, or an intelligent repeater, etc.

In some embodiments, the first node may be deployed on a mobile vehicle (e.g., a train, a high speed train, etc.), to provide a wireless network signal to a terminal device within the mobile vehicle.

In some embodiments, the first node includes at least one reflection module and a control module, the reflection module is used to adjust an arrival beam from a second node to a departure beam towards a third node. The above-described third node may be the terminal device 130 as shown in FIG. 1.

The mobility information of the first node described above includes mobility information of the at least one reflection module of the first node.

Exemplarily, the above-described at least one reflection module may include: a target reflection module (the target reflection module may be any one reflection module among the at least one reflection module). The mobility information of the target reflection module is described below from different perspectives, respectively.
I. The mobility information of the target reflection module includes position information of the target reflection module.

Exemplarily, the position information of the reflection module described above may be absolute position information of the target reflection module, or relative position information of the target reflection module.

The absolute position information of the target reflection module is used to indicate a position of the target reflection module on an earth surface; where the coordinate system may be a geographic coordinate system. The relative position information of the target reflection module may be a position of the target reflection module relative to a preset reference point.

In some embodiments, the absolute position information of the target reflection module may be determined as follows.

As a possible implementation, the first node includes a positioning apparatus that may be configured to measure the absolute position information of the target reflection module.

Exemplarily, the positioning apparatus may be a global positioning system (GPS) or a beidou navigation satellite system (BDS).

As another possible implementation, the absolute position information of the target reflection module may be determined based on absolute position information of the control module, and a relative position relationship between the control module and the target reflection module.

It can be understood that in the case where the target reflection module is co-located with the control module, the absolute address of the target reflection module is the same as the absolute position information of the control module. In the case where the target reflection module is not co-located with the control module, the absolute position information of the target reflection module is determined based on the relative position relationship between the control module and the target reflection module.

Exemplarily, the absolute position of the control module described above may be determined as follows.

Mode 1: The first node includes a positioning apparatus that may be configured to measure the absolute position information of the control module.

Mode 2: The absolute position information of the control module is determined based on a moving distance of the control module relative to a reference point.

Exemplarily, the first node may determine the absolute position information of the control module according to a preset moving route of the vehicle, and a moving distance of the control module relative to the reference point. Exemplarily, the reference point may be a departure point of the vehicle, or a stopping point in the moving route of the vehicle, or the like.

Mode 3: the second node (e.g., the base station) has a positioning measurement function and can perform positioning according to an uplink signal sent from the control module. For example, the second node calculates the absolute position information of the control module according to a time difference of the received uplink signal sent from the control module, and position information of the second node itself, based on an uplink signal time difference of arrival (uplink time difference of arrival, UL-TDOA) algorithm.

In some embodiments, the relative position information of the target reflection module described above may be determined based on a moving distance of the control module relative to a reference point, and a relative positional relationship between the control module and the target reflection module. The reference point may be a departure point of the vehicle, or a stopping point in the moving route of the vehicle, etc.

Exemplarily, in the case where the control module is co-located with the target reflection module and both are at the same position, the relative position information of the target reflection module is determined according to the moving distance of the control module relative to the reference point.

Exemplarily, in the case where the control module is not co-located with the target reflection module, the relative position information of the target reflection module is determined based on the moving distance of the control module relative to the reference point, and the relative position relationship between the control module and the target reflection module.

II. The mobility information of the target reflection module includes wireless network information of the target reflection module.

The wireless network information includes measurement information of a service cell and measurement information of a neighboring cell.

In some embodiments, the measurement information may include a signal quality of a beam (e.g., a beam transmitted from the serving cell, or a beam transmitted from the neighboring cell) and/or a signal quality of the cell. Exemplarily, the signal quality of the beam may include at least one of: reference signal receiving power (RSRP), signal to interference plus noise ratio (SINR), channel quality indication (CQI), and a rank indicator (RI), etc.

In some embodiments, the measurement information may also include information of the beam (e.g., an identifier of the beam, for example, the identifier of the beam may be an index of a reference signal carried by the beam) and/or information of the cell (e.g., an identifier of the cell).

In some embodiments, the wireless network information of the target reflection module may be determined according to wireless network information measured by the control module of the first node. Exemplarily, in the case where the control module is co-located with the target reflection module, the wireless network information measured by the control module is the wireless network information of the target reflection module; and in the case where the control module is not co-located with the target reflection module, the wireless network information of the target reflection module is determined according to the wireless network information detected by the control module, and the relative positional relationship between the control module and the target reflection module.

S202, determine a codebook updating strategy of the first node based on the mobility information of the first node.

The codebook updating strategy may include a reflection module that needs to update a codebook among the at least one reflection module of the first node, and a to-be-updated preset codebook corresponding to the reflection module, and a time offset or a distance offset for updating the codebook, and the like.

As a possible implementation, the codebook updating strategy of the first node may be determined by the first node. Exemplarily, as shown in FIG. 10, the above step S202 may be implemented as the following steps S2021 to S2023.

S2021, the first node determines whether mobility information of a target reflection module satisfies a codebook updating condition.

The target reflection module may be any one of the at least one reflection module of the first node.

The above step S2021 is described below, by taking an example in which the mobility information of the target reflection module includes the position information of the target reflection module; or an example in which the mobility information of the target reflection module includes the wireless network information of the target reflection module, respectively.

In some embodiments, in the case where the mobility information of the target reflection module includes the position information of the target reflection module, the above-described codebook updating condition may include at least one of:
a distance between a position of the target reflection module and a geographic area corresponding to a target codebook in a preset codebook table being less than or equal to a preset distance offset;
a position of the target reflection module to arrive at or enter a geographic area corresponding to a target codebook in a preset codebook table being less than or equal to a preset time offset.

Exemplarily, it is assumed that both the control module and the target reflection module of the first node are currently located in the 3rd route section, and then it is determined whether a distance between the geographic position of the target reflection module and a starting point of the 4th route section is less than or equal to L-offset (a preset distance offset); if so, it is considered that the target reflection module of the first node has satisfied the codebook updating condition.

Exemplarily, it is assumed that both the control module and the target reflection module of the first node are currently located in the 3rd route section, and then it is determined whether time for the current position of the target reflection module to arrive at or enter a starting point of the 4th route section is less than or equal to T-offset (a preset time offset); if so, it is considered that the target reflection module of the first node has satisfied the codebook updating condition.

At least one of the preset distance offset and the preset time offset described above is pre-configured by the second node, the RIS management entity, the core network element, or the third-party server.

In some embodiments, in the case where the mobility information of the target reflection module includes the wireless network information of the target reflection module, the above-described codebook updating condition may include at least one:
reference signal receiving power of a neighboring cell being higher than reference signal receiving power of a serving cell by a first preset threshold value;
reference signal receiving power of a neighboring cell being greater than or equal to a second preset threshold value;
reference signal receiving power of a service cell being less than or equal to a third preset threshold value.

At least one of the first preset threshold value, the second preset threshold value, and the third preset threshold value described above is pre-configured by the second node, the RIS management entity, the core network element, or the third-party server.

S2022, the first node determines a target codebook from a preset codebook table, in response that the mobility information of the target reflection module satisfies the codebook updating condition.

The target codebook is a to-be-updated codebook of the target reflection module, and the target codebook is matched with the mobility information of the target reflection module.

The following illustrates the above step S2022, by taking an example in which the mobility information of the target reflection module includes the position information of the target reflection module; or an example in which the mobility information of the target reflection module includes the wireless network information of the target reflection module, respectively.

(i) The mobility information of the target reflection module includes the position information of the target reflection module.

In some embodiments, the above-described preset codebook table may include a plurality of codebooks and geographic area information corresponding to each codebook of the plurality of codebooks. It can be understood that the geographic area corresponding to the codebook refers to a geographic area covered by a beam transmitted by the reflection module when the second node is recording the codebook.

The geographic area information corresponding to the codebook includes at least one of: a starting position, an ending position, a path length, a midpoint position, a radius, and a diameter. Exemplarily, the geographic area information corresponding to the codebook may include position information of a route section corresponding to the codebook. For example, a route section between the starting position and the ending position in the geographical area information corresponding to the codebook described above is a route section corresponding to the codebook.

Exemplarily, the position information may be represented in the form of a position coordinate. For example, the starting coordinate of the starting position of the route section a corresponding to the codebook a may be represented as (xas, yas, zas), and the ending coordinate of the ending position of the route section a corresponding to the codebook a may be represented as (xae, yae, zae); where x may be represented as a degree of longitude, y may be represented as a degree of latitude, z may be represented as a degree of altitude, a is represented as an identifier of the route section a, s is represented as the starting coordinate, and e is represented as the ending coordinate.

It can be understood that since the movement of the vehicle will lead to the movement of the first node, and then will lead to a continuous change in the relative position relationship between the first node and the base station, in order to ensure a stable coverage for the UE within the vehicle, the embodiments of the present disclosure may, according to the geographic position, divide the route of the vehicle's movement into different route sections, and preset an optimal codebook for each of the route sections, so that in the process of the vehicle's movement, a route section in which the first node is located may be determined according to the position information of the first node, and then, the codebook is updated timely and accurately for the first node, to ensure the stable coverage for the UE within the vehicle.

In some embodiments, in the case where the mobility information of the target reflection module includes the position information of the target reflection module, the above-described determining the target codebook from the preset codebook table may be implemented as the following steps.

Step a1: determine position information of the next route section of the target reflection module, based on the position information of the target reflection module, and the position information of each route section in the traveling route.

Exemplarily, it is assumed that the traveling route includes: a route section A, a route section B, a route section C, and a route section D. Assuming that the position information of the each route section may be represented as {(starting coordinate), (ending coordinate)}, the position information of the route section A is {(xas, yas, zas), (xae, yae, zae)}; the position information of the route section B is {(xbs, ybs, zbs), (xbe, ybe, zbe)}; the position information of the route section C is {(xcs, ycs, zcs), (xce, yce, zce)}; the position information of the route section D is {(xds, yds, zds), (xde, yde, zde)}. If the current position information of the target reflection module is {(xbs, ybs, zbs), (xbe, ybe, zbe)}, it indicates that the target reflection module is currently located in the route section B, the next route section of the target transmission module is the route section C, and the position information is {(xcs, ycs, zcs), (xce, yce, zce)}.

Step a2: select a target codebook matched with the position information of the next route section of the target reflection module, from the preset codebook table.

It can be understood that since the preset codebook table may include a plurality of codebooks and geographic area information corresponding to each codebook of the plurality of codebooks (the geographic area information corresponding to the codebook includes the position information of the route section corresponding to the codebook), the target codebook of the next route section of the target reflection module may be determined by comparing the position information of the next route section of the target reflection module with the geographic area information of each codebook in the preset codebook table.

Exemplarily, it is assumed that the preset codebook table includes: a codebook 1, a codebook 2, and a codebook 3. The geographic area information of the codebook 1 includes the position information of the route section corresponding to the codebook 1: {(xbs, ybs, zbs), (xbe, ybe, zbe)}; the geographic area information of the codebook 2 includes the position information of the route section corresponding to the codebook 2: {(xcs, ycs, zcs), (xce, yce, zce)}; and the geographic area information of the codebook 3: {(xds, yds, zds), (xde, yde, zde)}. If the position information of the next route section of the target reflection module is: {(xcs, ycs, zcs), (xce, yce, zce)}, it is determined that the target codebook of the next route section of the target reflection module is the codebook 2.

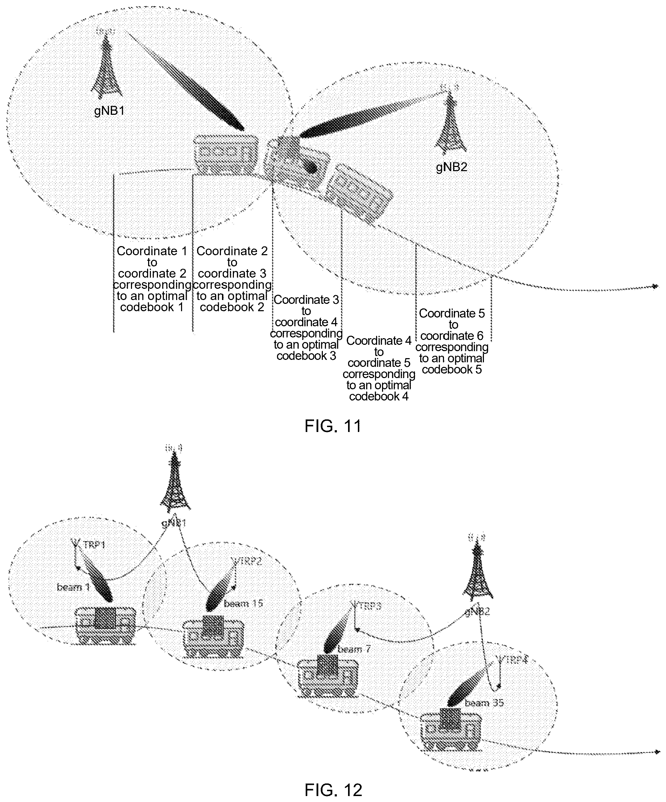

Exemplarily, as shown in FIG. 11, in the route passed by the first node, different route sections are divided according to position coordinates, and an optimal codebook is preset for each route section (the optimal codebook means that the reflection module of the first node can reflect an optimal arrival beam to serve the UEs in the vehicle, when using this codebook). As shown in FIG. 11, the first node deployed in a second train carriage has just left the coverage area of gNB1 and entered the coverage area of gNB2 in the current route section (coordinate 3 to coordinate 4), then the optimal codebook for the route section should be a codebook that reflects the beam of gNB2 towards the route section, rather than a codebook that reflects the beam of gNB1 towards the route section.

(ii) The mobility information of the target reflection module includes the wireless network information of the target reflection module.

In some embodiments, the above-described preset codebook table includes a plurality of codebooks and wireless network information corresponding to each codebook of the plurality of codebooks. The wireless network information corresponding to the codebook includes at least one of: service cell information, service beam information, information of a transmission point, and information of a centralized unit.

The service beam information refers to information of the optimal beam reflected by the reflection module of the first node when the first node loads the codebook. Exemplarily, the above-described service beam information may include an identifier (identity, ID) of the service beam. Exemplarily, the identifier of the service beam may be an index of a reference signal carried by the service beam. For example, the reference signal includes at least one of: an SSB, a CSI-RS, a tracking RS, a demodulation reference signal (DMRS), a positioning RS, and an interference RS.

The service cell information refers to information of a cell to which the optimal beam reflected by the reflection module of the first node belongs when the first node loads the codebook. Exemplarily, the above-described service cell information includes an identifier of the service cell. Exemplarily, the identifier of the service cell may include at least one of: a cell global identifier (GCI), a public land mobile network (PLMN) id, a cell identifier (cell id), a base station identifier, a physical cell identifier (PCI).

Exemplarily, the above-described wireless network information corresponding to the codebook may include any one of:
an identifier of the optimal beam, and an identifier of a cell to which the optimal beam belongs;
an identifier of the optimal beam, and an identifier of a base station for transmitting the optimal beam;
an identifier of the optimal beam, and an identifier of a transmission reception point for transmitting the optimal beam;
an identifier of the optimal beam, and an identifier of a centralized unit for transmitting the optimal beam.

It can be understood that the wireless network information corresponding to the codebook may be represented in a variety of ways in different network deployment modes. Exemplarily, in the scenario as shown in FIG. 6, the signal transmitted from the base station provides coverage to the terminal device, and then the wireless network information corresponding to the codebook may be represented as: an identifier of the optimal beam, and an identifier of a cell to which the optimal beam belongs; or, an identifier of the optimal beam, and an identifier of a base station for transmitting the optimal beam.

In the scenario as shown in FIG. 7, the signal transmitted from the TPR provides coverage to the terminal device, and then the wireless network information corresponding to the codebook may be represented as: an identifier of the optimal beam, and an identifier of a transmission reception point for transmitting the optimal beam.

In the scenario as shown in FIG. 8, the signal transmitted from the DU provides coverage to the terminal device, and then the wireless network information corresponding to the codebook may be represented as: an identifier of the optimal beam, and an identifier of a centralized unit for transmitting the optimal beam.

It can be understood that since the movement of the vehicle leads to the movement of the first node, and then leads to a continuous change in the relative position relationship between the first node and the base station, so that the strongest base station beam that can be measured by the first node is different, the embodiments of the present disclosure may preset the codebook according to the optimal beam measured by the first node. In this way, during the movement of the vehicle, the codebook may be timely and accurately updated for the first node according to the change in the arrival beam measured by the first node, to ensure stable coverage for the UE in the vehicle.

In some embodiments, in the case where the mobility information of the target reflection module includes the wireless network information of the target reflection module, the above-described determining the target codebook from the preset codebook table may be implemented as: selecting the target codebook matched with the wireless network information of the target reflection module, from the preset codebook table, according to the wireless network information of the target reflection module.

It can be understood that since the preset codebook table may include a plurality of codebooks and wireless network information corresponding to each codebook of the plurality of codebooks, the target codebook best matched with the wireless network information of the target reflection module may be determined by comparing the wireless network information of the target reflection module with the wireless network information of each codebook in the preset codebook table.

As a possible implementation, the wireless network information of the target reflection module may include information of an arrival beam of the target reflection module, and information of a cell to which the arrival beam belongs; and the wireless network information corresponding to the codebook may include service beam information and service cell information. Therefore, the above-described comparing the wireless network information of the target reflection module with the wireless network information of each codebook in the preset codebook table, may include: comparing the information of the arrival beam of the target reflection module with the service beam information corresponding to each codebook in the preset codebook table; and comparing the information of the cell to which the arrival beam of the target reflection module belongs with the service cell information corresponding to each codebook in the preset codebook table.

Exemplarily, it is assumed that the preset codebook table includes: a codebook 1, a codebook 2, and a codebook 3. The service beam information of the codebook 1 is SSB1, and the service cell information of the codebook 1 is GCI1; the service beam information of the codebook 2 is SSB2, and the service cell information of the codebook 2 is GCI2; and the service beam information of the codebook 3 is SSB3, and the service cell information of the codebook 3 is GCI3. If the arrival beam information of the target reflection module is SSB2, and the information of the cell to which the arrival beam belongs is GCI2, it is determined that the target codebook of the target reflection module is the codebook 2.

Exemplarily, as shown in FIG. 12, the codebook of the reflection module of the first node is updated according to the change in the arrival beam measured by the first node, during the traveling of the vehicle in accordance with the traveling route.

For example, in a first example position starting from the left, an arrival beam measured by the RIS is a "beam 1 of gNB1-TRP1", and then a target codebook matched with the "beam 1 of gNB1-TRP1" is found from the preset codebook library.

In a second example position starting from the left, an arrival beam measured by the RIS is a "beam 15 of gNB1-TRP2", and then a target codebook matched with the "beam 15 of gNB1-TRP2" is found from the preset codebook library.

In a third example position starting from the left, an arrival beam measured by the RIS is a "beam 7 of gNB2-TRP3", and then a target codebook matched with the "beam 7 of gNB2-TRP3" is found from the preset codebook library.

In a fourth example position starting from the left, an arrival beam measured by the RIS is a "beam 35 of gNB2-TRP4", and then a target codebook matched with the "beam 35 of gNB2-TRP4" is found from the preset codebook library.

In some embodiments, after the first node determines the target codebook of the target reflection module, the method further includes: sending an index of the target codebook and/or an identifier of the target reflection module to the second node.

It can be understood that after the first node determines the target codebook of the target reflection module, the first node may control the target reflection module to use the target codebook; at the same time, the first node may also inform the index of the target codebook and the identifier of the target reflection module that uses the target codebook, to the second node, so as to enable the second node to know the codebook updating situation of the first node.

S2023, the first node controls the target reflection module to use the target codebook.

In some embodiments, the control module of the first node may determine whether a distance between the target reflection module and the next route section is less than or equal to a preset distance offset, according to the relative position relationship between the control module and the target reflection module; if so, it controls the target reflection module to use the target codebook.

In some embodiments, the control module of the first node may determine whether time for the target reflection module to arrive at or enter the next route section is less than or equal to a preset time offset, according to the relative position relationship between the control module and the target reflection module, and a running speed of the high-speed train; if so, it controls the target reflection module to use the target codebook.

It can be understood that the above-described preset distance offset and preset time offset are intended to give a hardware processing delay for the target reflection module to change the codebook, so as to improve the dynamic performance of the beam management of the first node.

As another possible implementation, the codebook updating strategy of the first node may be determined by the second node (the second node may be the base station 110 as shown in FIG. 1). Then, the above step S202 may be implemented as: in response that the mobility information of the target reflection module satisfies the codebook updating condition, sending the mobility information of the target reflection module and/or codebook updating suggestion information to the second node; and then, the first node receives the codebook updating strategy sent from the second node.

The codebook updating suggestion may include an identifier of a candidate codebook determined by the first node according to the mobility information of the target reflection module.

Exemplarily, the exemplary implementation of the second node determining the codebook updating strategy described above may refer to the following steps S301 to S303, which will not be repeated herein.

It can be understood that in the mobility management method provided in the embodiments of the present disclosure, a codebook updating strategy is determined based on mobility information of the first node, by acquiring the mobility information of the first node. The codebook updating strategy may include a reflection module in the first node that needs to update a codebook, and a to-be-updated preset codebook corresponding to the reflection module, and a time offset or a distance offset for updating the codebook, and the like. As can be seen, in the embodiments of the present disclosure, by means of the preset codebook, there is no need to detect and determine the codebook in real time, which can reduce the measurement overhead and signaling overhead, reduce the time delay of the codebook updating, and improve the accuracy of the codebook updating.

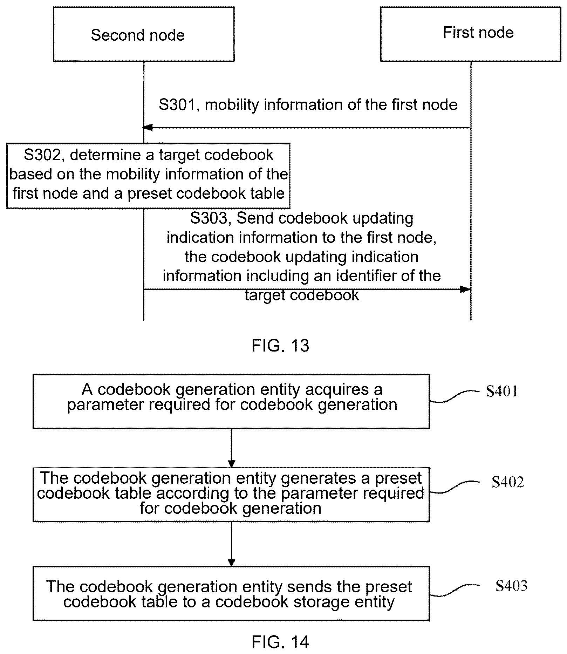

In the following, a mobility management method provided in the embodiments of the present disclosure is illustrated by taking an example in which the executive body is a second node (e.g., the second node may be the base station 110 as shown in FIG. 1). Exemplarily, as shown in FIG. 13, the method provided in the embodiments of the present disclosure may include the following steps.

S301, the second node acquires mobility information of a first node.

Exemplarily, the mobility information of the first node may be measured by the first node. In this way, the above step S301 may be implemented as that: the second node receives the mobility information of the first node sent from the first node.

Exemplarily, the mobility information of the first node may be measured by the second node. In this way, the above step S301 may be implemented as that: the second node measures the first node, to obtain the mobility information of the first node.

S302, determine a target codebook based on the mobility information of the first node and a preset codebook table.

In some embodiments, the mobility information of the first node includes mobility information of a target reflection module; and then the above step S302 may be implemented as the following steps.

In the case where the mobility information of the target reflection module satisfies a codebook updating condition, the target codebook is determined based on the mobility information of the target reflection module and the preset codebook table.

In some embodiments, the exemplary implementation of the above step S302 may refer to the exemplary implementation of the above step S202, which will not be repeated herein.

S303, send codebook updating indication information to the first node, the codebook updating indication information including an identifier of the target codebook.

The above-described codebook updating indication information also includes an index of a target reflection module corresponding to the target codebook, and the target reflection module belongs to at least one reflection module.

It can be understood that in the mobility management method provided in the embodiments of the present disclosure, the target codebook is determined based on the mobility information of the first node and the preset codebook table, by acquiring the mobility information of the first node; and the codebook updating indication information is sent to the first node, where the codebook updating indication information includes an identifier of the target codebook. As can be seen, in the embodiments of the present disclosure, by means of the preset codebook, there is no need to detect and determine the codebook in real time, which can reduce the measurement overhead and signaling overhead, reduce the time delay of the codebook updating, and improve the accuracy of the codebook updating.

In the following, the generation and storage procedures of the preset codebook table in the embodiments of the present disclosure are described. Exemplarily, as shown in FIG. 14, the generation and storage procedures of the preset codebook table may be implemented as the following steps.

S401, a codebook generation entity acquires a parameter required for codebook generation.

The codebook generation entity includes at least one of: a management entity of the first node, a control module of the first node, an OAM management backend, a third-party computing server, and a core network element. Exemplarily, the core network element includes, but is not limited to: an AMF, an SMF, a PCF, a UPF, and an AF.

In some embodiments, the parameter required for the codebook generation may be sent to the codebook generation entity from a parameter provider. Exemplarily, the provider may include any one of: an RIS management entity, an RIS-MT, an OAM management backend, and a core network.

In some embodiments, the above-described parameter required for the codebook generation includes: vehicle information, deployment information of the first node, and capability information of the first node.

The above-described vehicle information may include at least one of: information of a travelling route, a schedule, a running speed, and type information of a vehicle. Exemplarily, the information of the traveling route may include geographic coordinates of the traveling route, a direction of the traveling route of the vehicle (e.g., going or returning, etc.). The type information of the vehicle may include a model number of the vehicle, etc.

The deployment information of the first node described above includes at least one of:
information for indicating whether a control module and a reflection module of the first node are co-located;
a number of control modules of the first node;
an identifier of a control module of the first node;
a number of reflection modules managed by a control module of the first node;
an identifier of a reflection module managed by a control module of the first node;
a deployment position of a control module of the first node (e.g., the deployment position may be a relative position of the control module relative to a certain fixed reference point on the vehicle);
a deployment location of a reflection module of the first node (e.g., the deployment position may be a relative position of the reflection module relative to a certain fixed reference point on the vehicle);
a phase position relationship between a control module of the first node and a reflection module managed by the control module of the first node (e.g., a horizontal distance and a vertical distance between the control module and the reflection module managed by the control module, etc.);
a deployment azimuth angle of a reflection module of the first node relative to a vehicle (e.g., the deployment azimuth angle may be a pitch angle and a horizontal angle, etc.);
a departure beam configuration of a reflection module of the first node (e.g., the departure beam configuration may include: a number of departure beams, a departure beam width, a departure beam frequency point, a departure beam bandwidth, a size of a departure beam coverage area, and a departure angle, etc.);
wireless network information corresponding to each route section in a traveling route (e.g., the wireless network information corresponding to each route section includes an optimal arrival beam information corresponding to each route section); and
a route section length covered by an optimal arrival beam of each route section in the traveling route (the route section length covered by the optimal arrival beam of each route section is different, because each route section has a different shape (which may be straight or curved) and the sparsity and the proximity of the deployment of the roadside base stations are different).

Exemplarily, the capability information of the first node may include at least one of:
an operating frequency band of a control module of the first node;
an operating frequency band of a reflection module of the first node;
an operating mode supported by a reflection module of the first node (e.g., the operating mode may include an incident mode, a reflective mode, a partially transmissive mode, and a partially reflective mode, etc.); and
a physical parameter of a reflection module of the first node.

**In** some embodiments, the physical parameter of the reflection module of the first node include at least one of: an aperture, a reflective unit density, a frequency characteristic, a supported frequency width, reciprocity characteristic information, a degree of difference in respective directions, and an adjustable angle section.

S402, the codebook generation entity generates a preset codebook table according to the parameter required for the codebook generation.

In some embodiments, the codebook generation entity generating the preset codebook table according to the parameter required for the codebook generation may have the following implementations.
(i) Generate the preset codebook table based on the information of the travelling route.

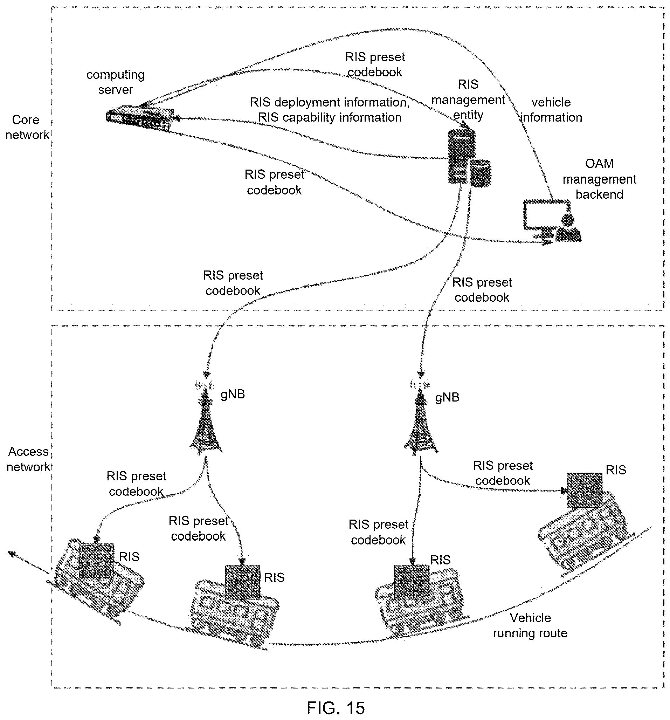

Exemplarily, an example of the first node as an RIS is taken for the illustration. As shown in FIG. 15, assuming that the RIS management entity and the OAM management backend are deployed in the core network domain, a computing server of the core network may be used as the codebook generation entity. The OAM management backend provides vehicle information to the computing server, and the RIS management entity provides RIS deployment information and RIS capability information to the computing server; the computing server generates RIS preset codebooks on the entire route according to the above-described information; and sends the RIS preset codebooks to the RIS management entity and the OAM backend; the RIS management entity may forward the RIS preset codebooks to the base station(s) deployed along the vehicle running route, and the RIS on the vehicle.

Exemplarily, the RIS preset codebook generated by the computing server may be in the form shown in Table 1 below.

**Table 1**

| Route section serial number | Position information of the route section | RIS preset codebook corresponding to the route section |
|---|---|---|
| Section 1 | (starting coordinate 1, stopping coordinate 1) | Codebook serial number a1 |
| Section 2 | (starting coordinate 2, stopping coordinate 2) | Code book serial number a2 |
| Section 3 | (starting coordinate 3, stopping coordinate 3) | Code book serial number a3 |
| Section 4 | (starting coordinate 4, stopping coordinate 4) | Code book serial number a4 |
| ...... | ...... | ...... |
| Section N | (starting coordinate N, stopping coordinate N) | Codebook serial number aN |

(ii) Generate a preset codebook table based on the deployment of the wireless network of the traveling route.

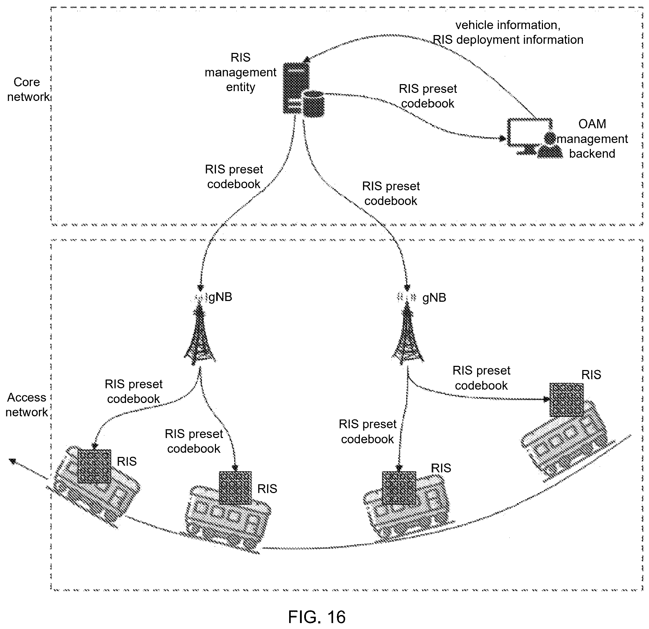

Exemplarily, an example of the first node as an RIS is taken for the illustration. As shown in FIG. 16, the RIS management entity and the OAM management backend may be deployed in the core network domain; the RIS management entity itself may be used as the codebook generation entity, and the OAM management backend may be used as the parameter provider to provide vehicle information and RIS deployment information to the RIS management entity; the RIS management entity itself stores the capability information of all the RISs; and then, the RIS management entity generates RIS preset codebooks on the entire route according to the above-described information; and sends the RIS preset codebooks to the OAM management backend, the base station deployed along the vehicle running route, and the RIS on the vehicle.

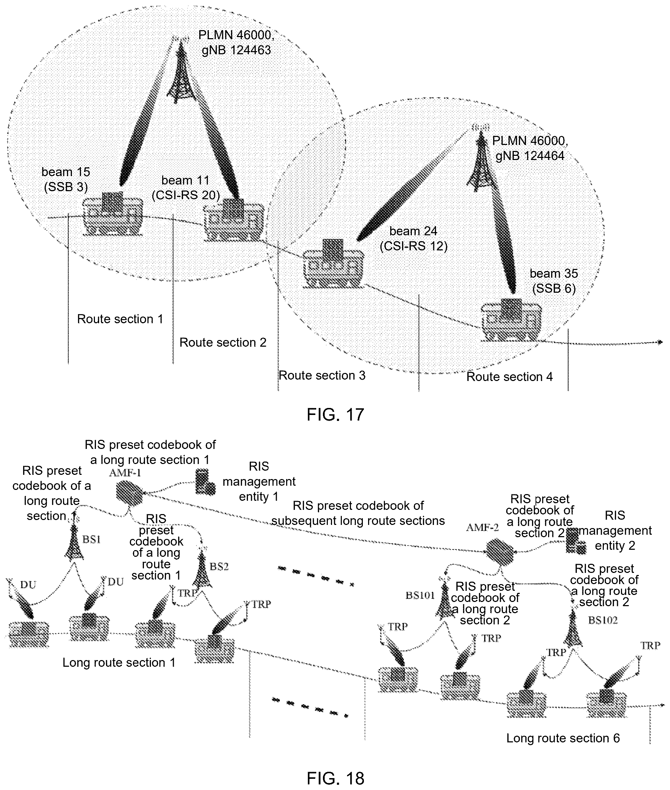

As shown in FIG. 17, the embodiments of the present disclosure may preset the codebooks based on optimal beam information (including an optimal beam ID, and a cell ID to which the optimal beam belongs) of each route section. Exemplarily, the RIS preset codebooks generated by the RIS management entity in the embodiments of the present disclosure may be in the form shown in Table 2 below.

**Table 2**

| Serial number of the route section | Optimal beam information corresponding to the route section | RIS preset codebook corresponding to the route section |
|---|---|---|
| Section 1 | PLMN 46000 (China Mobile), gNB id (124463), cell id (798), beam No. 15 (configured with a reference signal SSB index 3) | Codebook serial number a1 |
| Section 2 | PLMN 46000 (China Mobile), gNB id (124463), cell id (799), beam No. 11 (configured with a reference signal CSI-RS index 20) | Codebook serial number a2 |
| Section 3 | PLMN 46000 (China Mobile), gNB id (124464), cell id (263), beam No. 24 | Codebook serial number a3 |
| | (configured with a reference signal CSI-RS index 12) | |
| Section 4 | PLMN 46000 (China Mobile), gNB id (124464), cell id (264), beam No. 35 (configured with a reference signal SSB index 6) | Codebook serial number a4 |
| ...... | ...... | ...... |
| Section N | ...... | Codebook serial number aN |

S403, the codebook generation entity sends the preset codebook table to a codebook storage entity.

In some embodiments, the preset codebook table is stored in the codebook storage entity, and the codebook storage entity includes at least one of: a management entity of the first node, the second node, a control module of the first node, the OAM management backend, the third-party computing server, and a core network element.

In some embodiments, for a longer route, a method of generating based on sections and storing based on sections may be used, i.e., if the codebook generation entity manages different route sections, it may only generate preset codebooks corresponding to the local route sections it manages, and store them in the codebook storage entity of the local route sections; and a method of generating in centralized manner and storing based on sections may also be used, i.e., a codebook generation entity generates the preset codebooks of the entire route, and distributes them to codebook storage entities of different route sections.

Exemplarily, taking a high-speed train as an example, the length of the entire route may range from several hundred kilometers to several thousand kilometers, and the number of base stations or cells deployed along the route may be in the thousands or even tens of thousands, and they may be managed by different core network elements. Therefore, for such scenarios with longer travelling routes, a method of managing based on sections may be used. For example, as shown in FIG. 18, the RIS preset codebooks of the entire high-speed train route may be collectively generated by an RIS management entity, and then, RIS preset codebooks corresponding to each long route section are distributed to an RIS management entity to which each long route section belongs. Each RIS management entity may generate RIS preset codebooks corresponding to the long route section it manages.

If two RIS management entities are deployed in the management area of the same access and mobility management function (AMF) entity, and have no direct connection interface between them, they may interact for the RIS preset codebooks through the AMF, and if there is a direct connection interface between them, they may directly interact for the RIS preset codebooks through the direct connection interface.

If two RIS management entities are deployed in the management areas of different AMFs, respectively, and for example, in FIG. 18, an RIS management entity 1 and an RIS management entity 2 are deployed in an AMF-1 and an AMF-2, respectively, the RIS preset codebooks may be transmitted through an interface between the AMF-1 and the AMF-2.

In addition, the number of RIS preset codebooks corresponding to each long route section may be controlled to be less than 1,000 to reduce the signaling overhead required for storing and transmitting the codebooks.

For ease of understanding, the mobility management method provided in the embodiments of the present disclosure is described below in the form of examples in conjunction with application scenarios.

It should be noted that for ease of description, an example in which the first node is an RIS, a reflection module of the first node is an RIS-Fwd, a control module of the first node is an RIS-MT, and the second node is a base station, is taken for the illustration.

Scenario I: The mobility information of the RIS-Fwd includes position information, and a preset codebook is matched for the RIS-Fwd, based on the position information of the RIS-Fwd.

Exemplarily, assuming that the preset codebook library is in the form shown in Table 1 above, codebook updating modes of the RIS-Fwd of each RIS deployed on the train during the running of the high-speed train are as follows.

Mode 1: The base station indicates the RIS to update the codebook.

Exemplarily, the roadside base station may detect a real-time position of each RIS-MT on the high-speed train in real time (the real-time position may be reported by the RIS-MT independently, or the existing base station positioning mechanism may be used to acquire the position of the RIS-MT), and when it is found that a distance between the position of the m-th RIS-Fwd managed by the n-th RIS-MT on the high-speed train and the next route section (a preset codebook corresponding to the next route section is different from a preset codebook corresponding to the current position of the above-described m-th RIS-Fwd) is less than or equal to L-offset1, the base station delivers a codebook updating indication to the n-th RIS-MT, to indicate the n-th RIS-MT to update the m-th RIS-Fwd to the codebook corresponding to the next route section, after a time offset of T-offset or after a position offset of L-offset2 after receiving the codebook updating indication.

n is an integer greater than or equal to 1, m is an integer greater than or equal to 1, L-offset1 and L-offset2 are predefined position offsets, and L-offset1 and L-offset2 may be positive values, 0, or negative values; and T-offset is a predefined time offset, and T-offset may be positive values, 0, or negative values.

Exemplarily, L-offset1, L-offset2, and T-offset may be configured by any one of the base station, the RIS management entity, or the OAM management backend, and sent to the RIS-MT in advance.

In some embodiments, the above Mode 1 may also be performed by the RIS management entity. That is, the RIS management entity may acquire the real-time position of each RIS-MT on the high-speed train in real time, and then determine whether the codebook needs to be updated according to the real-time position, and send the codebook updating indication to the RIS-MT in response that the codebook needs to be updated. The exemplary implementation may refer to Mode 1 described above, and will not be repeated herein.

Mode 2: The RIS updates the codebook independently.

Exemplarily, each RIS-MT on the high-speed train may independently detect the real-time position of each RIS-Fwd it manages (e.g., the real-time position of each RIS-Fwd may be derived according to the real-time position of the RIS-MT, and the relative position relationship between the RIS-MT and the respective RIS-fwd); and when the RIS-MT finds that a distance between the current position of the m-th RIS-Fwd it manages and the next route section (a preset codebook corresponding to the next route section is different from a preset codebook corresponding to the current position of the above-described m-th RIS-Fwd) is less than or equal to L-offset3, the RIS-MT controls the m-th RIS-Fwd to be updated to the preset codebook corresponding to the next route section.

The real-time position of the RIS-MT may be acquired by a satellite positioning module (e.g., a GPS or a BDS) integrated in the RIS-MT, or acquired by using the positioning measurement function of the base station.

L-offset3 is a predefined position offset, and the position offset is set to give a hardware processing delay for the RIS-Fwd to update the codebook.

In some embodiments, the RIS-MT also needs to send the id of the m-th RIS-Fwd and the identifier of the preset codebook corresponding to the next route section to the base station, the RIS management entity, and the OAM management backend.

Scenario II: The mobility information of the RIS-Fwd includes wireless network information, and the preset codebook is matched for the RIS-Fwd based on the wireless network information measured by the RIS-MT.

Exemplarily, it is assumed that the preset codebook library is in the form shown in Table 3 below:

**Table 3**

| Serial number of the route section | Optimal beam information corresponding to the route section | RIS preset codebook corresponding to the route section |
|---|---|---|
| ...... | ...... | ...... |
| Route section N+1 | PLMN 46001 (China Telecom), PCI id 23, beam No. 11 (configured with a reference signal SSB index 3) | Codebook serial number b1 |
| Route section N+2 | PLMN 46000 (China Telecom), PCI id 24, beam No. 13 (configured with a reference signal SSB index 7) | Codebook serial number b2 |
| Route section N+3 | PLMN 46000 (China Telecom), PCI id 25, beam No. 7 (configured with a reference signal SSB index 5) | Codebook serial number b3 |
| Route section N+4 | PLMN 46000 (China Telecom), PCI id 26, beam No. 14 (configured with a reference signal SSB index 13) | Codebook serial number b4 |
| ...... | ...... | ...... |

Based on Table 3 above, codebook updating modes of the RIS-Fwd of each RIS deployed on the train during the running of the high-speed train are as follows.

Mode 1: The base station indicates the RIS to update the codebook.

Exemplarily, the each RIS-MT on the high-speed train detects, in real time, the downlink reference signal strength of the service cell and the neighboring cell, and determines whether the reference signal strength satisfies the following codebook updating conditions:
the reference signal receiving power of the neighboring cell being higher than the reference signal receiving power of the serving cell by a preset threshold thres1;
the reference signal receiving power of the neighboring cell being higher than a preset threshold value thres2;
the reference signal receiving power of the neighboring cell being higher than a preset threshold value thres3, and the reference signal receiving power of the serving cell being lower than a preset threshold thres4.

The above preset thresholds may be configured by the base station and delivered to the RIS.

In the case that the reference signal strength satisfies the above-described codebook updating condition, the RIS-MT sends the detection result to the base station.

Furthermore, after receiving the detection result, the base station, according to the relative position relationship between the RIS-MT and each RIS-Fwd managed by the RIS-MT, in conjunction with the running speed of the high-speed train, determines that the m-th RIS-Fwd managed by the RIS-MT will enter the next route section after the T-offset (the preset codebook corresponding to the next route section is different from the preset codebook corresponding to the current position of the above-described m-th RIS-Fwd); and then, the base station delivers a codebook updating indication (including the m-th RIS-Fwd id of the to-be-updated codebook, the index of the to-be-updated preset codebook, and T-offset1) to the RIS-MT.

Accordingly, the RIS-MT updates the codebook of the m-th RIS-Fwd to the preset codebook corresponding to the next route section after T-offset1, after receiving the codebook updating indication.

T-offset1 is a predefined time offset.

In some embodiments, the above Mode 1 may also be performed by the RIS management entity. That is, the RIS-MT sends the detection result to the RIS management entity, and the RIS management entity determines whether the codebook needs to be updated according to the detection result, and sends a codebook updating indication to the RIS-MT in response that the codebook needs to be updated. The exemplary implementation may refer to Mode 1 above, and will not be repeated herein.

Mode 2: The RIS updates the codebook independently.

Exemplarily, each RIS-MT on the high-speed train detects, in real time, the downlink reference signal strength of the service cell and the neighboring cell, and determines whether the reference signal strength satisfies the following codebook updating conditions:
the reference signal receiving power of the neighboring cell being higher than the reference signal receiving power of the serving cell by a preset threshold thres1;
the reference signal receiving power of the neighboring cell being higher than a preset threshold value thres2;
the reference signal receiving power of the neighboring cell being higher than a preset threshold value thres3, and the reference signal receiving power of the serving cell being lower than a preset threshold thres4.

The above preset thresholds may be configured by the base station and delivered to the RIS.

In the case where the reference signal strength satisfies the above codebook updating condition, it is determined that the m-th RIS-Fwd managed by the RIS-MT will enter the next route section after the T-offset (the preset codebook corresponding to the next route section is different from the preset codebook corresponding to the current position of the above-described m-th RIS-Fwd), according to the relative position relationship between the RIS-MT and each RIS-Fwd managed by the RIS-MT, in conjunction with the running speed of the high-speed train; and then, the RIS-MT controls the m-th RIS-Fwd to be updated to the preset codebook corresponding to the next route section after T-offset2.

The above-described preset codebook corresponding to the next route section may be determined according to the beam information of the arrival beam detected by the RIS-MT. Exemplarily, assuming that the RIS is in the above-described route section N+1, and at this time, the RIS-Fwd uses a codebook corresponding to the codebook serial number b1, and when the RIS moves to the route section N+2 with the vehicle, the arrival beam information measured by the RIS-MT is "PLMN 46000 (China Telecom), PCI id 24, beam No. 13 (configured with a reference signal SSB index 7)", then the RIS-MT may query the preset codebook table according to the cell identifier and the beam identifier in the arrival beam information, and find that the beam information corresponding to the codebook serial number b2 in the preset codebook table may be matched with it, and then determine that the preset codebook corresponding to the next route section is the codebook corresponding to the codebook serial number b2.

In addition, the RIS-MT also needs to send the id of the m-th RIS-Fwd and the updated preset codebook index to the base station, the RIS management entity, and the OAM management backend.

The above describes the solutions of the embodiments of the present disclosure mainly from the perspective of methods. It can be understood that a management apparatus, in order to implement the above-described functions, includes at least one of corresponding hardware structures and software modules for performing respective functions. Those skilled in the art should easily realize that, in conjunction with the units and algorithmic steps of the various examples described in the embodiments disclosed herein, the embodiments of the present disclosure can be implemented in the form of hardware or a combination of hardware and computer software. Whether a certain function is performed as hardware or computer software driving hardware depends on the specific application and design constraint conditions of the technical solutions. The skilled professional may use different methods to implement the described functions for each specific application, but such implementations should not be considered outside the scope of the embodiments of the present disclosure.

It can be understood that the management apparatus, in order to implement the above-described functions, includes the corresponding hardware structures and/or software modules for performing the respective functions. Those skilled in the art should easily realize that the present disclosure can be implemented in the form of hardware or a combination of hardware and computer software, in conjunction with the algorithmic steps of the respective examples described in the embodiments of the present disclosure. Whether a certain function is performed by hardware or computer software-driven hardware depends on the specific application and design constraints of the technical solutions. Professional technicians may use different methods to implement the described functions, for each specific application, but such an implementation should not be considered beyond the scope of the present disclosure.

In the embodiments of the present disclosure, the management apparatus may be divided into functional modules according to the above-described method embodiments, and for example, each functional module may be divided corresponding to each function, or two or more functions may be integrated into one functional module. The above-described integrated module may be implemented in the form of hardware or may be implemented in the form of software. It should be noted that the division of modules in the embodiments of the present disclosure is illustrative, and is merely a kind of logical functional division, and there may be other division methods in actual implementations. The example in which each functional module may be divided corresponding to each function is taken for explanation below.

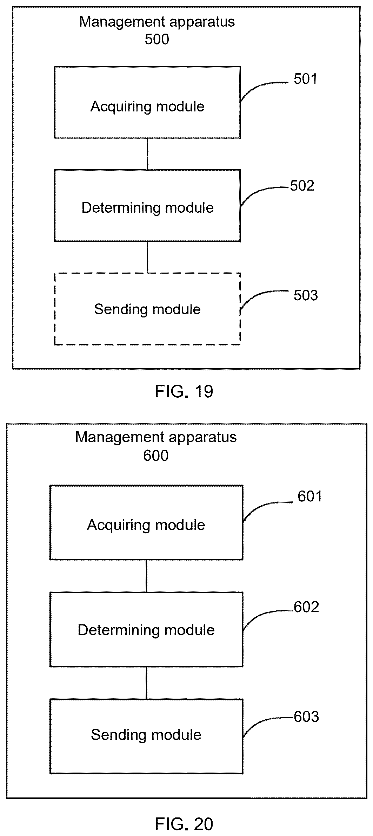

FIG. 19 is a schematic diagram of a structure of a management apparatus provided in the embodiments of the present disclosure, and the management apparatus is applied to a first node and may perform the mobility management method provided in the above method embodiments. As shown in FIG. 19, the management apparatus 500 may include: an acquiring module 501 and a determining module 502. In other embodiments, the management apparatus 500 may also include a sending module 503.

The acquiring module 501 is configured to acquire mobility information of the first node.

The determining module 502 is configured to determine a codebook updating strategy of the first node based on the mobility information of the first node.

In some embodiments, the first node includes at least one reflection module, and the reflection module is used to adjust an arrival beam from a second node to a departure beam towards a third node.

In some embodiments, the mobility information of the first node includes mobility information of a target reflection module among the at least one reflection module; and the determining module 502 may be configured to send the mobility information of the target reflection module and/or codebook updating suggestion information to the second node, in response that the mobility information of the target reflection module satisfies a codebook updating condition.

In some embodiments, the mobility information of the first node includes mobility information of a target reflection module among the at least one reflection module; and the determining module 502 may be configured to determine a target codebook from a preset codebook table and controlling the target reflection module to use the target codebook, in response that the mobility information of the target reflection module satisfies a codebook updating condition.

**In** some embodiments, the sending module 503 is configured to send an index of the target codebook and/or an identifier of the target reflection module to the second node.

**In** some embodiments, the preset codebook table includes a plurality of codebooks and geographic area information corresponding to each codebook of the plurality of codebooks.

In some embodiments, the geographic area information corresponding to the codebook includes at least one of: a starting position, an ending position, a path length, a midpoint position, a radius, and a diameter.

In some embodiments, the preset codebook table includes a plurality of codebooks and wireless network information corresponding to each codebook of the plurality of codebooks.

In some embodiments, the wireless network information corresponding to the codebook includes at least one of: service cell information, service beam information, information of a transmission point, and information of a centralized unit.

In some embodiments, the service beam information includes an index of a reference signal carried by a service beam, and the reference signal includes at least one of: a synchronization signal, a channel state information reference signal, a tracking reference signal, a demodulation reference signal, a positioning reference signal, and an interference reference signal.

In some embodiments, the service cell information includes at least one of: a cell global identifier, a public land mobile network, a cell identifier, a base station identifier, a physical cell identifier.

In some embodiments, the mobility information of the target reflection module includes position information of the target reflection module or wireless network information; where the wireless network information includes measurement information of a service cell and measurement information of a neighboring cell, and the measurement information includes reference signal receiving power.

In some embodiments, the position information of the target reflection module is absolute position information of the target reflection module; where the absolute position information of the target reflection module is used to indicate a position of the target reflection module on an earth surface.

In some embodiments, the first node further includes a control module; the absolute position information of the target reflection module is measured by a positioning apparatus; or the absolute position information of the target reflection module is determined based on absolute position information of the control module, and a relative position relationship between the control module and the target reflection module.

In some embodiments, the absolute position information of the control module is obtained by the second node performing a positioning measurement for the control module; or the absolute position information of the control module is obtained by the positioning apparatus performing a measurement; or the absolute position information of the control module is determined based on a moving distance of the control module relative to a reference point.

In some embodiments, the position information of the target reflection module is relative position information of the target reflection module; where the relative position information of the target reflection module is used to indicate a position of the target reflection module relative to a reference point.

In some embodiments, the first node further includes a control module; and the relative position information of the target reflection module is determined based on a moving distance of the control module relative to the reference point, and a relative position relationship between the control module and the target reflection module.

In some embodiments, the codebook updating condition includes at least one of: a distance between a position of the target reflection module and a geographic area corresponding to a target codebook in a preset codebook table being less than or equal to a preset distance offset; a position of the target reflection module to arrive at or enter a geographic area corresponding to a target codebook in a preset codebook table being less than or equal to a preset time offset; reference signal receiving power of a neighboring cell being higher than reference signal receiving power of a serving cell by a first preset threshold value; reference signal receiving power of a neighboring cell being greater than or equal to a second preset threshold value; and reference signal receiving power of a service cell being less than or equal to a third preset threshold value.

In some embodiments, the preset codebook table is generated by a codebook generation entity, and the codebook generation entity includes at least one of: a management entity of the first node, a control module of the first node, an operation administration and maintenance (OAM) management backend, a third-party computing server, and a core network element.

In some embodiments, the preset codebook table is stored in a codebook storage body, and the codebook storage body includes at least one of: a management entity of the first node, the second node, a control module of the first node, an OAM management backend, a third-party computing server, and a core network element.

In some embodiments, the preset codebook table is generated based on at least one of vehicle information, deployment information of the first node, and capability information of the first node.

In some embodiments, the vehicle information includes at least one of: information of a traveling route, a schedule, a running speed, and type information of a vehicle.

In some embodiments, the deployment information of the first node includes at least one of:
information for indicating whether a control module and a reflection module of the first node are co-located;
a number of control modules of the first node;
an identifier of a control module of the first node;
a number of reflection modules managed by a control module of the first node;
an identifier of a reflection module managed by a control module of the first node;
a deployment position of a control module of the first node;
a deployment location of a reflection module of the first node;
a phase position relationship between a control module of the first node and a reflection module managed by the control module of the first node;
a deployment azimuth angle of a reflection module of the first node relative to a vehicle;
a departure beam configuration of a reflection module of the first node;
wireless network information corresponding to each route section in a traveling route; and
a length of each route section in a traveling route.

In some embodiments, the capability information of the first node includes at least one of:
an operating frequency band of a control module of the first node;
an operating frequency band of a reflection module of the first node;
an operating mode supported by a reflection module of the first node;
a physical parameter of a reflection module of the first node.

In some embodiments, the first node is a reconfigurable intelligent surface (RIS), a network controlled repeater (NCR), or an intelligent repeater.

In some embodiments, a codebook is used to indicate a correspondence between an arrival beam and a departure beam.

FIG. 20 is a schematic diagram of a structure of a management apparatus provided in the embodiments of the present disclosure, and the management apparatus is applied to a second node and may perform the mobility management method provided in the above method embodiments. As shown in FIG. 20, the management apparatus 600 may include: an acquiring module 601, a determining module 602, and a sending module 603.

The acquiring module 601 is configured to acquire mobility information of the first node.

The determining module 602 is configured to determine a target codebook based on the mobility information of the first node and a preset codebook table.

The sending module 603 is configured to send a codebook updating indication information to the first node, the codebook updating indication information including an identifier of the target codebook.

In some embodiments, the first node includes at least one reflection module, and the reflection module is used to adjust an arrival beam from the second node to a departure beam towards a third node.

In some embodiments, the codebook updating indication information further includes an index of a target reflection module corresponding to the target codebook, and the target reflection module belongs to the at least one reflection module.

In some embodiments, the mobility information of the first node includes mobility information of a target reflection module; and the determining module 602 may be configured to determine the target codebook based on the mobility information of the target reflection module and the preset codebook table, in response that the mobility information of the target reflection module satisfies a codebook updating condition.

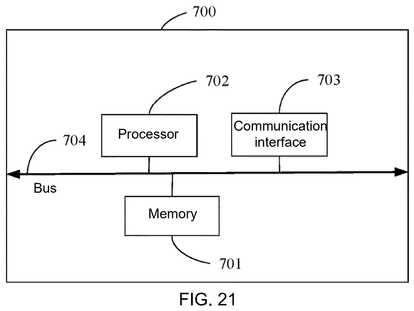

In a case of implementing the functions of the integrated modules described above in the form of hardware, the embodiments of the present disclosure provide a possible structure of the communication apparatus involved in the above embodiments. As shown in FIG. 21, the communication apparatus 700 includes: a processor 702, a bus 704. In some embodiments, the communication apparatus 700 may further include a memory 701; in some embodiments, the communication apparatus 700 may further include a communication interface 703.

The processor 702 may implement or perform various exemplary logical blocks, modules and circuits described in conjunction with the embodiments of the present disclosure. The processor 702 may be a central processing unit, a general-purpose processor, a digital signal processor, an application specific integrated circuit, a field programmable gate array or other programmable logic devices, a transistor logic device, a hardware component or any combination thereof, which may implement or perform various exemplary logical blocks, modules and circuits described in conjunction with the embodiments of the present disclosure. The processor 702 may also be a combination that implements computing functions, for example, including a combination of one or more microprocessors, a combination of a digital signal processor (DSP) and a microprocessor, or the like.

The communication interface 703 is configured to connect with other devices via a communication network. The communication network may be an Ethernet, a radio access network, a wireless local area network (WLAN), or the like.

The memory 701 may be, but be not limited to, a read-only memory (ROM) or other types of static storage devices capable of storing static information and instructions, a random access memory (RAM) or other types of dynamic storage devices capable of storing information and instructions, or may also be an electrically erasable programmable read-only memory (EEPROM), a magnetic disk storage medium or other magnetic storage devices, or any other medium capable of being used to carry or store the desired program codes in the form of instructions or data structures and capable of being accessed by a computer.

As a possible implementation, the memory 701 may exist independently of the processor 702, and the memory 701 may be connected to the processor 702 via the bus 704 and is used for storing instructions or program codes. The processor 702, when calling and executing the instructions or program codes stored in the memory 701, is capable of implementing the mobility management method provided by the embodiments of the present disclosure.

In another possible implementation, the memory 701 may also be integrated with the processor 702.

The bus 704 may be an extended industry standard architecture (EISA) bus or the like. Buses 704 may be divided into address buses, data buses, control buses, and the like. For the convenience of representation, only one thick line is used in FIG. 21 for representation, but it does not mean that there is only one bus or one type of bus.

Some embodiments of the present disclosure provide a computer-readable storage medium (e.g., a non-transitory computer-readable storage medium), and the computer-readable storage medium has stored computer program instructions therein that, when running on a computer, cause the computer to perform the mobility management method as described in any of the above-described embodiments.

Exemplarily, the above-described computer-readable storage medium may include, but be not limited to, a magnetic storage device (e.g., a hard disk, a floppy disk or a magnetic tape, etc.), an optical disk (e.g., a Compact Disk (CD) or a Digital Versatile Disk (DVD), etc.), a smart card and a flash memory device (e.g., an Erasable Programmable Read-Only Memory (EPROM), a card, a stick or a key driver, etc.). The various computer-readable storage media described in the present disclosure may represent one or more devices and/or other machine-readable storage media for storing information. The term "machine-readable storage medium" may include, but be not limited to, a radio channel and various other media capable of storing, containing, and/or carrying instructions and/or data.

The embodiments of the present disclosure provide a computer program product including instructions, and the computer program product, when running on a computer, causes the computer to perform the mobility management method as described in any embodiment of the above-described embodiments.

The foregoing is only the specific implementations of the present disclosure, but the protection scope of the present disclosure is not limited thereto, and any changes or substitutions within the scope of the technologies disclosed in the present disclosure should be covered within the protection scope of the present disclosure. Therefore, the protection scope of the present disclosure should be based on the protection scope of claims.

## Claims

1. A mobility management method, **characterized in that** the method is applied to a first node, and the method comprises:
acquiring mobility information of the first node; and
determining a codebook updating strategy of the first node based on the mobility information of the first node.

2. The method according to claim 1, wherein the first node comprises at least one reflection module, and the reflection module is used to adjust an arrival beam from a second node to a departure beam towards a third node.

3. The method according to claim 2, wherein the mobility information of the first node comprises mobility information of a target reflection module among the at least one reflection module; and determining the codebook updating strategy of the first node based on the mobility information of the first node, comprises:
sending the mobility information of the target reflection module and/or codebook updating suggestion information to the second node, in response that the mobility information of the target reflection module satisfies a codebook updating condition.

4. The method according to claim 2, wherein the mobility information of the first node comprises mobility information of a target reflection module among the at least one reflection module; and determining the codebook updating strategy of the first node based on the mobility information of the first node, comprises:
determining a target codebook from a preset codebook table and controlling the target reflection module to use the target codebook, in response that the mobility information of the target reflection module satisfies a codebook updating condition.

5. The method according to claim 4, further comprising:
sending an index of the target codebook and/or an identifier of the target reflection module to the second node.

6. The method according to claim 4, wherein the preset codebook table comprises a plurality of codebooks and geographic area information corresponding to each codebook of the plurality of codebooks.

7. The method according to claim 6, wherein the geographic area information corresponding to each codebook comprises at least one of: a starting position, an ending position, a path length, a midpoint position, a radius, and a diameter.

8. The method according to claim 4, wherein the preset codebook table comprises a plurality of codebooks and wireless network information corresponding to each codebook of the plurality of codebooks.

9. The method according to claim 8, wherein the wireless network information corresponding to the codebook comprises at least one of: service cell information, service beam information, information of a transmission point, and information of a centralized unit.

10. The method according to claim 9, wherein the service beam information comprises an index of a reference signal carried by a service beam, and the reference signal comprises at least one of: a synchronization signal, a channel state information reference signal, a tracking reference signal, a demodulation reference signal, a positioning reference signal, and an interference reference signal.

11. The method according to claim 9, wherein the service cell information comprises at least one of: a cell global identifier, a public land mobile network, a cell identifier, a base station identifier, and a physical cell identifier.

12. The method according to claim 3 or 4, wherein the mobility information of the target reflection module comprises position information of the target reflection module or wireless network information; wherein the wireless network information comprises measurement information of a service cell and measurement information of a neighboring cell, and the measurement information comprises reference signal receiving power.

13. The method according to claim 12, wherein the position information of the target reflection module is absolute position information of the target reflection module; wherein the absolute position information of the target reflection module is used to indicate a position of the target reflection module on an earth surface.

14. The method according to claim 13, wherein the first node further comprises a control module; and
the absolute position information of the target reflection module is measured by a positioning apparatus; or
the absolute position information of the target reflection module is determined based on absolute position information of the control module, and a relative position relationship between the control module and the target reflection module.

15. The method according to claim 14, wherein
the absolute position information of the control module is obtained by the second node performing a positioning measurement for the control module; or
the absolute position information of the control module is obtained by the positioning apparatus performing a measurement; or
the absolute position information of the control module is determined based on a moving distance of the control module relative to a reference point.

16. The method according to claim 12, wherein the position information of the target reflection module is relative position information of the target reflection module; wherein the relative position information of the target reflection module is used to indicate a position of the target reflection module relative to a reference point.

17. The method according to claim 16, wherein the first node further comprises a control module; and the relative position information of the target reflection module is determined based on a moving distance of the control module relative to the reference point, and a relative position relationship between the control module and the target reflection module.

18. The method according to claim 3 or 4, wherein the codebook updating condition comprises at least one of:
a distance between a position of the target reflection module and a geographic area corresponding to a target codebook in a preset codebook table being less than or equal to a preset distance offset;
a position of the target reflection module to arrive at or enter a geographic area corresponding to a target codebook in a preset codebook table being less than or equal to a preset time offset;
reference signal receiving power of a neighboring cell being higher than reference signal receiving power of a serving cell by a first preset threshold value;
reference signal receiving power of a neighboring cell being greater than or equal to a second preset threshold value; and
reference signal receiving power of a service cell being less than or equal to a third preset threshold value.

19. The method according to claim 4, wherein the preset codebook table is generated by a codebook generation entity, and the codebook generation entity comprises at least one of: a management entity of the first node, a control module of the first node, an operation administration and maintenance (OAM) management backend, a third-party computing server, and a core network element.

20. The method according to claim 4, wherein the preset codebook table is stored in a codebook storage body, and the codebook storage body comprises at least one of: a management entity of the first node, the second node, a control module of the first node, an OAM management backend, a third-party computing server, and a core network element.

21. The method according to claim 4, wherein the preset codebook table is generated based on at least one of vehicle information, deployment information of the first node, and capability information of the first node.

22. The method according to claim 21, wherein the vehicle information comprises at least one of: information of a traveling route, a schedule, a running speed, and type information of a vehicle.

23. The method according to claim 21, wherein the deployment information of the first node comprises at least one of:
information for indicating whether a control module and a reflection module of the first node are co-located;
a number of control modules of the first node;
an identifier of a control module of the first node;
a number of reflection modules managed by a control module of the first node;
an identifier of a reflection module managed by a control module of the first node;
a deployment position of a control module of the first node;
a deployment location of a reflection module of the first node;
a phase position relationship between a control module of the first node and a reflection module managed by the control module of the first node;
a deployment azimuth angle of a reflection module of the first node relative to a vehicle;
a departure beam configuration of a reflection module of the first node;
wireless network information corresponding to each route section in a traveling route; and
a length of each route section in a traveling route.

24. The method according to claim 21, wherein the capability information of the first node comprises at least one of:
an operating frequency band of a control module of the first node;
an operating frequency band of a reflection module of the first node;
an operating mode supported by a reflection module of the first node;
a physical parameter of a reflection module of the first node.

25. The method according to claim 1, wherein the first node is a reconfigurable intelligent surface (RIS), a network controlled repeater (NCR), or an intelligent repeater.

26. The method according to claim 1, wherein a codebook is used to indicate a correspondence between an arrival beam and a departure beam.

27. A mobility management method, **characterized in that** the method is applied to a second node, and the method comprises:
acquiring mobility information of a first node;
determining a target codebook based on the mobility information of the first node and a preset codebook table; and
sending a codebook updating indication information to the first node, the codebook updating indication information comprising an identifier of the target codebook.

28. The method according to claim 27, wherein the first node comprises at least one reflection module, and the reflection module is used to adjust an arrival beam from the second node to a departure beam towards a third node.

29. The method according to claim 28, wherein the codebook updating indication information further comprises an index of a target reflection module corresponding to the target codebook, and the target reflection module belongs to the at least one reflection module.

30. The method according to claim 28, wherein the mobility information of the first node comprises mobility information of a target reflection module;
determining the target codebook based on the mobility information of the first node and the preset codebook table, comprises:
determining the target codebook based on the mobility information of the target reflection module and the preset codebook table, in response that the mobility information of the target reflection module satisfies a codebook updating condition.

31. A communication apparatus, **characterized by** comprising: a memory and a processor; wherein the memory is coupled with the processor; the memory is configured to store instructions executable by the processor; and the processor, when executing the instructions, performs the method according to any one of claims 1 to 26, or the method according to any one of claims 27 to 30.

32. A computer-readable storage medium, **characterized in that** the computer-readable storage medium has stored computer instructions, and the computer instructions, when executed on an electronic device, cause the electronic device to perform the method according to any one of claims 1 to 26, or the method according to any one of claims 27 to 30.
